## Europäisches Patentamt
## European Patent Office
## Office européen des brevets

(11) Veröffentlichungsnummer: **0 158 009**
**B1**

(12) **EUROPÄISCHE PATENTSCHRIFT**

(45) Veröffentlichungstag der Patentschrift:
**27.04.88**

(51) Int. Cl.⁴: **B 01 J 47/04**

(21) Anmeldenummer: **85100573.6**

(22) Anmeldetag: **21.01.85**

(54) **Verfahren zur Sichtbarmachung der Trennlinie zwischen Kationen- und Anionenaustauschern in Mischbettfiltern.**

(30) Priorität: **11.04.84 DE 3413562**

(43) Veröffentlichungstag der Anmeldung:
**16.10.85 Patentblatt 85/42**

(45) Bekanntmachung des Hinweises auf die Patenterteilung:
**27.04.88 Patentblatt 88/17**

(84) Benannte Vertragsstaaten:
**AT BE DE FR GB IT NL**

(56) Entgegenhaltungen:
**US-A-2 736 698**
**US-A-4 151 332**
**US-A-4 473 664**

(73) Patentinhaber: **BAYER AG, Konzernverwaltung RP Patentabteilung, D-5090 Leverkusen 1 Bayerwerk (DE)**

(72) Erfinder: **Martinola, Friedrich, Dr., Leopold- Gmelin- Strasse 16, D-5000 Köln 80 (DE)**

## Beschreibung

Die Erfindung betrifft ein Verfahren zur Sichtbarmachung der Trennlinie zwischen Kationen- und Anionenaustauschern in Mischbettfiltern.

Mischbettfilter sind bekannt (siehe z. B. Ullmanns Enzyklopädie der technischen Chemie, 4. Auflage, 1977, Band 13, Seite 324). Es sind Ionenaustausch-Filter, die mit Kationenaustauschern und Anionenaustauschern gefüllt sind. Während des Beladungsvorganges liegen Kationen- und Anionenaustauscher in Form einer innigen Mischung vor. Zum Regenerieren der beladenen Austauscher wird das Mischbett hydraulisch unter Ausnutzung des unterschiedlichen spezifischen Gewichts und der unterschiedlichen Korngröße von Kationen- und Anionenaustauscher in diese beiden Komponenten aufgetrennt, und zwar in eine untere Schicht aus den spezifisch schwereren, grobkörnigeren Kationenaustauschern und in eine obere Schicht aus den spezifisch leichteren feinkörnigeren Anionenaustauschern. Im Anschluß an die Auftrennung werden Kationen- und Anionenaustauscher getrennt regeneriert und ausgewaschen.

Bei der Auftrennung des Mischbettes in seine Komponenten ist es nicht nur wichtig, daß sich die beiden Komponenten sauber voneinander trennen und eine scharfe Trennlinie gegeneinander bilden, sondern auch, daß diese Trennlinie gut erkennbar ist.

Mischbettfilter sind in der Höhe der vorgesehenen Trennlinie zwischen Kationen- und Anionenaustauscher mit einer Vorrichtung zum Ein- und Ableiten von Regenerier- und Waschlösungen (Mitteldrainage) versehen. Da es für die auf die Auftrennung folgende Regenerierung von großer Wichtigkeit ist, daß die Trennlinie genau in der Höhe dieser Mitteldrainage liegt, sind in Mischbettfiltern in Höhe der Mitteldrainage Schaugläser angebracht, durch die man die richtige und scharfe Einstellung der Trennlinie während des Auftrennens und ihre Lage nach Beendigung des Trennvorganges beobachten kann. Nach jedem Auftrennvorgang wird überprüft, ob sich die Trennlinie wieder genau auf der Höheder Mitteldrainage befindet und, falls erforderlich, die Lage der Trennlinie, z. B. durch eine geeignete Einstellung der Strömungsgeschwindigkeit des nach oben strömenden Wassers, korrigiert.

Da es für das Verfolgen und das Einstellen der Lage der Trennlinie von großer Bedeutung ist, daß diese gut sichtbar ist, hat man bislang, um sie gut sichtbar zu machen, folgende Maßnahmen ergriffen bzw. vorgeschlagen:

1. Die beiden Komponenten, Kationen- und Anionenaustauscher, so auszuwählen, daß sie sich optisch unterscheiden; z. B. hat man gelförmige Kationenaustauscher und makroporöse Anionenaustauscher miteinander kombiniert. Es hat sich jedoch in der Praxis erwiesen, daß es schwierig ist, Kationen- und Anionenaustauscher-Kombinationen zu finden, die gleichzeitig die gewünschten Ionenaustauscher-Eigenschaften und die erforderlichen Unterschiede in den optischen Eigenschaften aufweisen. Aus verschiedenen Gründen ist man in der Praxis häufig gezwungen, Mischbettkomponenten auszuwählen, die sich in Farbe und Aussehen nicht oder nur wenig unterscheiden. Vielfach wurde auch beobachtet, daß sich die zunächst unterschiedlichen Farben der beiden Komponenten im Laufe der Betriebszeit angleichen, z. B. durch Verunreinigung der Harzpartikel.

2. Der aus technischer Sicht gewünschten Ionenaustauscherkombination durch Anfärben einer Komponente mit Farbstoffen den gewünschten Unterschied in den optischen Eigenschaften zu verleihen. Aber auch diese Maßnahme hat sich nicht bewährt, weil die Farbstoffe unvermeidlich mit der Zeit ausgewaschen werden und auf diese Weise nicht nur der Farbunterschied zwischen beiden Komponenten verschwindet, sondern die ausgewaschenen Farbstoffe zusätzlich noch die aufzubereitende Lösung verunreinigen.

Als dritte Möglichkeit wurde vorgeschlagen (vgl. US-A-4 151 332), zwischen Kationen- und Anionenaustauscher eine dritte inerte Harz-Komponente einzutragen, die sich in ihrer Farbe vom Kationen- und Anionenaustauscher unterscheidet. Eine exakte Einstellung der in diesem Fall auftretenden zwei Trennlinien ist aber nur möglich, wenn Körnung und spezifisches Gewicht der mittleren inerten Komponente genau zwischen den Eigenschaften des Kationen- und des Anionenaustauschers liegen. Schon geringe Abweichungen von der Dichte oder der Korngröße, wie sie z. B. durch Verunreinigung und Zerbrechen der Harzkörner hervorgerufen wird, genügen, um ein exaktes Einstellen der Trennlinien unmöglich zu machen. Außerdem verringert die zusätzliche inerte Komponente, weil sie am Ionenaustausch nicht teilnimmt, die aktive Masse im Mischbettfilter.

Es wurde nun überraschenderweise gefunden, daß sich die Trennlinie zwischen Kationen- und Anionenaustauscher eines Mischbettes auf eine sehr praktische und einfache Weise, die die vorgenannten Nachteile nicht aufweist, sichtbar machen läßt, wenn man den Mischbettkomponenten als Trennlinien-Indikator eine zur Ausbildung einer sichtbaren Linie gerade ausreichende Menge entweder

(a) eines Kationenaustauschers zusetzt, der sich optisch deutlich von dem zum Aufbau des Mischbettes verwendeten Kationen- und Anionenaustauscher unterscheidet, dessen Dichte geringfügig, nämlich 0,01-0,05 g/ml unter der Dichte des Mischbett-Kationenaustauschers liegt und dessen Korngröße in etwa der Korngröße des feinkörnigen Anteils des Mischbett-Kationenaustauschers entspricht, oder

(b) eines Anionenaustauschers zusetzt, der sich optisch deutlich von dem zum Aufbau des Mischbettes verwendeten Kationen- und Anionenaustauscher unterscheidet, dessen Dichte geringfügig, nämlich 0,01 - 0,05 g/ml über der Dichte des Mischbett-Anionenaustauschers liegt und dessen Korngröße in etwa der Korngröße des grobkörnigen Anteils des Mischbett-Anionenaustauschers entspricht.

Überraschenderweise wurde gefunden, daß sich der als Trennlinien-Indikator zu verwendende Kationenaustauscher (Anionenaustauscher) trotz seiner von der Dichte des Mischbett-Kationenaustauschers (Mischbett-Anionenaustauschers) nur geringfügig abweichenden Dichte, bevorzugt im oberen Bereich des Mischbett-Kationenaustauschers (unteren Bereich des Mischbett-Anionenaustauschers) in der Nähe der Trennlinie anordnet und dort, infolge seiner optischen Eigenschaften, zur Ausbildung einer scharfen, gut sichtbaren Trennlinie gegen den Mischbett-Anionenaustauscher (Mischbett-Kationenaustauscher) führt.

Die Erfindung betrifft daher ein Verfahren zur Sichtbarmachung der Trennlinie zwischen Kationen- und Anionenaustauscher in Mischbettfiltern nach der Auftrennung des Mischbettes in seine beiden Komponenten, das dadurch gekennzeichnet ist, daß man den das Mischbett bildenden Kationen- und Anionenaustauschern eine zur Ausbildung einer sichtbaren Linie ausreichende Menge entweder

(a) eines Kationenaustauschers zusetzt, der sich optisch deutlich von dem zum Aufbau des Mischbettes verwendeten Kationen- und Anionenaustauscher unterscheidet, der eine um 0,01 - 0,05 g/ml geringere Dichte als der Mischbett-Kationenaustauscher aufweist und dessen Harzperlen überwiegend die gleichen Korngrößen aufweisen, wie die feinste Siebfraktion des Mischbett-Kationenaustauschers; oder

(b) eines Anionenaustauschers zusetzt, der sich optisch deutlich von den zum Aufbau des Mischbettes verwendeten Kationen- und Anionenaustauscher unterscheidet, der eine um 0,01 - 0,05, g/ml höhere Dichte als der Mischbett-Anionenaustauscher aufweist und dessen Harzperlen überwiegend die gleichen Korngrößen aufweisen, wie die gröbste Siebfraktion des Mischbett-Anionenaustauschers.

Die zur Ausbildung einer sichtbaren Linie ausreichenden Mengen an Trennlinien-Indikator betragen im allgemeinen im Fall (a) 1 bis 10 Vol.-%, vorzugsweise 3 bis 8 Vol.-%, bezogen auf das Volumen des Mischbett-Kationenaustauschers und im Falle (b) 1 bis 10 Vol.-%, vorzugsweise 2 bis 6 Vol.-%, bezogen auf das Volumen des Mischbett-Anionenaustauschers.

Unter feinster bzw. gröbster Siebfraktion ist im Rahmen des erfindungsgemäßen Verfahrens die Fraktion zu verstehen, die bei der Klassierung des betreffenden Mischbett-Ionenaustauschers in vier verschiedene Korngrößenbereiche als feinster bzw. gröbster Korngrößenbereich anfällt.

Gelförmige starksaure Kationen- und starkbasische Anionenaustauscher weisen im allgemeinen eine um 0,01-0,05 g/ml höhere Dichte auf als die vergleichbaren makroporösen starksauren Kationen- bzw. starkbasischen Anionenaustauscher. Da sich die handelsüblichen gelförmigen Kationen- und Anionenaustauscher optisch deutlich von den handelsüblichen makroporösen Kationen- und Anionenaustauschern unterscheiden - die gelförmigen Ionenaustauscher sind üblicherweise durchscheinend/glasig und meist braungelb bis braun gefärbt, die makroporösen Ionenaustauscher sind dagegen opak/kreidig und meist weißlich bis gelb gefärbt - sind gelförmige Ionenaustauscher als Trennlinien-Indikatoren in aus makroporösen Ionenaustauschern aufgebauten Mischbetten und makroporöse Ionenaustauscher als Trennlinien-Indikatoren in aus gelförmigen Ionenaustauschern aufgebauten Mischbetten ausgezeichnet geeignet.

Eine bevorzugte Ausführungsform des erfindungsgemäßen Verfahrens besteht deshalb darin, in Mischbettfiltern, die nur mit gelförmigen Ionenaustauschern gefüllt sind, makroporöse Ionenaustauscher und in Mischbettfiltern, die nur mit makroporösen Ionenaustauschern gefüllt sind, gelförmige Ionenaustauscher als Trennlinien-Indikatoren zu verwenden. Diese bevorzugte Ausführungsform läßt sich besonders einfach in der Weise ausführen, daß man in den aus gelförmigen Kationen- und Anionenaustauschern aufgebauten Mischbetten makroporöse Kationenaustauscher und in den aus makroporösen Kationen- und Anionenaustauschern aufgebauten Mischbetten gelförmige Anionenaustauscher als Trennlinien-Indikatoren verwendet.

**Beispiel 1**

In einer Filtersäule (innerer Durchmesser: 70 mm) wird aus folgenden Komponenten ein Mischbett aufgebaut:

750 ml eines gelförmigen starksauren Kationenaustauschers (optische Eigenschaften: durchscheinend, braun; Dichte (in der Na-Form): 1,24 g/ml; Korngröße der feinsten Siebfraktion: 0,4 - 0,6 mm)

1000 ml eines gelförmigen starkbasischen Anionenaustauschers (optische Eigenschaften: durchscheinend, braun; Dichte (in der Cl-Form): 1,09 g/ml)

30 ml ( = 4 Vol.-%, bezogen auf das Volumen des gelförmigen starksauren Kationenaustauschers) eines makroporösen starksauren Kationenaustauschers (optische Eigenschaften: opak, weiblich gelb; Dichte (in der Na-Form): 1,20 g/ml; Korngröße: 0,4 - 0,6 mm)

Das Mischbett wird in üblicher Weise beladen und anschließend im Aufstrom in Kationen- und Anionenaustauscher aufgetrennt.

Nach beendeter Auftrennung hat sich der hellfarbige Indikator-Kationenaustauscher so stark im oberen, Trennlinien-nahen Bereich des dunkelfarbigen Mischbett-Kationenaustauschers angereichert, daß dieser nunmehr eine helle, gut sichtbare Trennlinie gegen den dunkelfarbigen Anionenaustauscher bildet. Ohne den Zusatz des Indikator-Kationenaustauschers ist die Trennlinie zwischen Kationen- und Anionenaustauscher nur undeutlich erkennbar.

**Beispiel 2**

In einer Filtersäule (innerer Durchmesser: 50 mm) wird aus folgenden Komponenten ein Mischbett aufgebaut:

500 ml eines starksauren makroporösen Kationenaustauschers
(optische Eigenschaften: opak, weißlich gelb; Dichte (in der Na-Form): 1,20 g/ml)
1000 ml eines starkbasischen makroporösen Anionenaustauschers
(optische Eigenschaften: opak, gelblich; Dichte (in der Cl-Form): 1,08 g/ml; Korngröße der gröbsten Siebfraktion: 0,8-1,1 mm)
50 ml (= 5 Vol.-%, bezogen auf das Volumen des starkbasischen makroporösen Anionenaustauschers) eines gelförmigen starkbasischen Anionenaustauschers
(optische Eigenschaften: durchscheinend, braun; Dichte (in der Cl-Form): 1,09 g/ml; Korngröße: 0,8 - 1,10 mm)

Das Mischbett wird in üblicher Weise beladen und anschließend im Aufstrom in Kationen- und Anionenaustauscher aufgetrennt.

Nach beendeter Auftrennung hat sich der dunkelfarbige Indikator-Anionenaustauscher so stark im unteren, Trennlinien-nahen Bereich des hellfarbigen Mischbett-Anionenaustauschers angereichert, daß dieser nunmehr eine dunkle, gut sichtbare Trennlinie gegen den hellfarbigen Kationenaustauscher bildet.

Ohne den Zusatz des Indikator-Anionenaustauschers ist die Trennlinie zwischen Kationen- und Anionenaustauscher praktisch nicht erkennbar.

**Patentansprüche**

1. Verfahren zur Sichtbarmachung der Trennlinie zwischen Kationen- und Anionenaustauschern in Mischbettfiltern, dadurch gekennzeichnet, daß man den das Mischbett bildenden Kationen- und Anionenaustauschern eine zur Ausbildung einer sichtbaren Linie ausreichende Menge entweder

(a) eines Kationenaustauschers zusetzt, der sich optisch deutlich von dem zum Aufbau des Mischbettes verwendeten Kationen- und Anionenaustauscher unterscheidet, der eine um 0,01 - 0,05 g/ml geringere Dichte als der Mischbett-Kationenaustauscher aufweist und dessen Harzperlen überwiegend die gleichen Korngrößen aufweisen, wie die feinste Siebfraktion des Mischbett-Kationenaustauschers; oder

(b) eines Anionenaustauschers zusetzt, der sich optisch deutlich von dem zum Aufbau des Mischbettes verwendeten Kationen- und Anionenaustauscher unterscheidet, der eine um 0,01 - 0,05 g/ml höhere Dichte als der Mischbett-Anionenaustauscher aufweist und dessen Harzperlen überwiegend die gleichen Korngrößen aufweisen, wie die gröbste Siebfraktion des Mischbett-Anionenaustauschers.

2. Verfahren gemäß Anspruch 1, dadurch gekennzeichnet, daß im Fall (a) die Menge an zugesetztem Kationenaustauscher 1 bis 10 Vol.-%, bezogen auf das Volumen des Mischbett-Kationenaustauschers und im Falle (b) die Menge an zugesetztem Anionenaustauscher 1 bis 10 Vol.-%, bezogen auf das Volumen des Mischbett-Anionenaustauschers, beträgt.

3. Verfahren gemäß Anspruch 1, dadurch gekennzeichnet, daß im Fall (a) die Menge an zugesetztem Kationenaustauscher 3 bis 8 Vol.-%, bezogen auf das Volumen des Mischbett-Kationenaustauschers und im Falle (b) die Menge an zugesetztem Anionenaustauscher 2 bis 6 Vol.-%, bezogen auf das Volumen des Mischbett-Anionenaustauschers, beträgt.

4. Verfahren gemäß Anspruch 1, dadurch gekennzeichnet, daß man gelförmigen, ein Mischbett bildenden Kationen- und Anionenaustauschern 1 bis 10 Vol.-%, bezogen auf das Volumen des gelförmigen Kationenaustauschers, eines opak aussehenden makroporösen Kationenaustauschers zusetzt, der eine um 0,01 - 0,05 g/ml geringere Dichte als der gelförmige Mischbett-Kationenaustauscher aufweist und dessen Harzperlen überwiegend die gleichen Korngrößen aufweisen, wie die feinste Siebfraktion des gelförmigen Kationenaustauschers.

5. Verfahren gemäß Anspruch 4, dadurch gekennzeichnet, daß man den opak aussehenden makroporösen Kationenaustauscher in einer Menge von 3 bis 8 Vol.-%, bezogen auf das Volumen des gelförmigen Kationenaustauschers, zusetzt.

6. Verfahren gemäß Anspruch 1, dadurch gekennzeichnet, daß man makroporösen, ein Mischbett bildenden Kationen- und Anionenaustauschern 1 bis 10 Vol.-%, bezogen auf das Volumen des Anionenaustauschers, eines glasig-durchscheinend aussehenden gelförmigen Anionenaustauschers zusetzt, der eine um 0,01 - 0,05 g/ml größere Dichte als der makroporöse Mischbett-Anionenaustauscher aufweist und dessen Harzperlen überwiegend die gleichen Korngrößen aufweisen, wie die gröbste Siebfraktion des makroporösen Anionenaustauscners.

7. Verfahren gemäß Anspruch 6, dadurch gekennzeichnet, daß man den glasig-durchscheinend aussehenden gelförmigen Anionenaustauscher in einer Menge von 2 bis 6 Vol.-%, bezogen auf das Volumen des makroporösen Anionenaustauschers, einsetzt.

## Claims

1. Method for rendering visible the line of separation between cation exchangers and anion exchangers in mixed-bed filters, characterised in that an amount, sufficient to form a visible line, of either

(a) a cation exchanger which clearly differs optically from the cation exchanger and anion exchanger used to build up the mixed bed and has a density 0.01 - 0.05 g/ml lower than that of the mixed-bed cation exchanger, and the resin beads of which predominantly have the same particle sizes as the finest screen fraction of the mixed-bed cation exchanger, or

(b) an anion exchanger which clearly differs optically from the cation exchanger and anion exchanger used to build up the mixed bed and has a density 0.01 - 0.05 g/ml higher than that of the mixed-bed anion exchanger, and the resin beads of which predominantly have the same particle sizes as the coarsest screen fraction of the mixed-bed anion exchanger,

is added to the cation exchangers and anion exchangers constituting the mixed bed.

2. Method according to Claim 1, characterised in that the amount of added cation exchanger is 1 to 10 vol. %, relative to the volume of the mixed-bed cation exchanger, in case (a), and the amount of added anion exchanger is 1 to 10 vol. %, relative to the volume of the mixed-bed anion exchanger, in case (b).

3. Method according to Claim 1, characterised in that the amount of added cation exchanger is 3 to 8 vol. %, relative to the volume of the mixed-bed cation exchanger, in case (a), and the amount of added anion exchanger is 2 to 6 vol. %, relative to the volume of the mixed-bed anion exchanger, in case (b).

4. Method according to Claim 1, characterised in that 1 to 10 vol. %, relative to the volums of the gel-like cation exchanger, of a macroporous cation exchanger which has an opaque appearance and a density 0.01 - 0.05 g/ml lower than that of the gel-like mixed-bed cation exchanger, and the resin beads of which predominantly have the same particle sizes as the finest screen fraction of the gel-like cation exchanger, is added to gel-like cation exchangers and anion exchangers which constitute a mixed bed.

5. Method according to Claim 4, characterised in that the macroporous cation exchanger having an opaque appearance is added in an amount of 3 to 8 vol. %, relative to the volume of the gel-like cation exchanger.

6. Method according to Claim 1, characterised in that 1 to 10 vol. %, relative to the volume of the anion exchanger, of a gel-like anion exchanger which has a glassy translucent appearance and a density 0.01 - 0.05 g/ml higher than that of the macroporous mixed-bed anion exchanger, and the resin beads of which predominantly have the same particle sizes as the coarsest screen fraction of the macroporous anion exchanger, is added to macroporous cation exchangers and anion exchangers which constitute a mixed bed.

7. Method according to Claim 6, characterised in that the gel-like anion exchanger having a glassy translucent appearance is employed in an amount of 2 to 6 vol. %, relative to the volume of the macroporous anion exchanger.

## Revendications

1. Procédé pour rendre visible la ligne de séparation entre échangeurs de cations et d'anions dans des filtres à lits mixtes, caractérisé en ce qu'aux échangeurs de cations et d'anions qui forment le lit mixte on ajoute une quantité suffisante pour la constitution d'une ligne visible, soit

(a) d'un échangeur de cations qui se différencie optiquement de manière nette des échangeurs de cations et d'anions utilisés pour la constitution du lit mixte et qui présente une densité plus faible de 0,01-0,05 g/ml par rapport à celle de l'échangeur de cations du lit mixte et dont les perles de résine présentent en majorité les mêmes granulométries que la fraction la plus fine au tamis de l'échangeur de cations du lit mixte, soit

(b) d'un échangeur d'anions qui se différencie optiquement de manière nette des échangeurs de cations et d'anions utilisés pour la constitution du lit mixte et qui présente une densité supérieure de 0,01 - 0,05 g/ml par rapport à celle de l'échangeur d'anions du lit mixte et dont les perles de résine présentent en majorité les mêmes granulométries que la fraction la plus grossière au tamis de l'échangeur d'anions du lit mixte.

2. Procédé selon la revendication 1, caractérisé en ce que dans le cas (a) la quantité ajoutée d'échangeur de cations est de 1 à 10 % en volume par rapport au volume de l'échangeur de cations du lit mixte et dans le cas (b) la quantité ajoutée d'échangeur d'anions est de 1 à 10 % en volume par rapport au volume de l'échangeur d'anions du lit mixte.

3. Procédé selon la revendication 1, caractérisé en ce que dans le cas (a) la quantité d'échangeur de cations ajoutée est de 3 à 8 % en volume par rapport au volume de l'échangeur de cations du lit mixte et en ce que dans le cas (b) la quantité ajoutée d'échangeur d'anions est de 2 à 6 % en volume par rapport au volume de l'échangeur d'anions du lit mixte.

4. Procédé selon la revendication 1, caractérisé en ce qu'aux échangeurs de cations et d'anions en forme de gel qui constituent un lit mixte on ajoute 1 à 10 % en volume, par rapport au volume de l'échangeur de cations formant un gel, d'un échangeur de cations macroporeux d'aspect opaque qui présente une densité plus faible de 0,01 - 0,05 g/ml par rapport à l'échangeur de cations du lit mixte en forme de gel et dont les perles de résine présentent en majorité les mêmes granulométries que la fraction la plus fine au tamis de l'échangeur de cations en forme de gel.

5. Procédé selon la revendication 4, caractérisé en ce qu'on ajoute l'échangeur de cations macroporeux d'aspect opaque en une quantité de 3 à 8 % en volume par rapport au volume de l'échangeur de cations en forme de gel.

6. Procédé selon la revendication 1, caractérisé en ce qu' aux échangeurs de cations et d'anions macroporeux qui forment un lit mixte, on ajoute 1 à 10 % en volume, par rapport au volume de l'échangeur d'anions, d'un échangeur d'anions en forme de gel d'aspect vitreux translucide qui présente une densité supérieure de 0,01 - 0,05 g/ml par rapport à celle de l'échangeur d'anions macroporeux du lit mixte et dont les perles de résine présentent en majorité les mêmes granulométries que la fraction la plus grossière au tamis de l'échangeur d'anions macroporeux.

7. Procédé selon la revendication 6, caractérisé en ce qu'on ajoute l'échangeur d'anions en forme de gel d'aspect vitreux translucide en une quantité de 2 à 6 % en volume par rapport au volume de l'échangeur d'anions macroporeux.